# EUROPÄISCHE PATENTSCHRIFT

(11) **EP 3 319 849 B1**
(45) Veröffentlichungstag und Bekanntmachung des Hinweises auf die Patenterteilung: **26.02.2020**
(21) Anmeldenummer: 16735888.6
(22) Anmeldetag: 07.07.2016
(51) Int. Cl.: B60T 13/567

(54) **PNEUMATISCHER BREMSKRAFTVERSTÄRKER MIT EINER ABGESETZTEN ANLAGEFLÄCHE**
PNEUMATIC BRAKE BOOSTER WITH A TERRACED CONNECTING SURFACE
SERVOMOTEUR PNEUMATIQUE D'ASSISTANCE AU FREINAGE AVEC UNE SURFACE DE CONTACT ÉCHELONNÉE

(30) Priorität: 10.07.2015 DE 102015212986
(43) Veröffentlichungstag der Anmeldung: 16.05.2018
(73) Patentinhaber: Continental Teves AG & Co. OHG, 60488 Frankfurt am Main (DE)
(72) Erfinder: FALLER, Jürgen, 63796 Kahl (DE); MUNIZ, Juliano, 13.219-522 Jundiaí-SP (BR); LADEIRA, Gustavo, 13.216-610 Jundiaí-SP (BR); GAIOTTO, Fabio, 13.209-355 Jundiaí-SP (BR); IDERIHA, Marcelo, 04277-010 Bairro: Vila D. Pedro I-SP (BR); ARAUJO, Fabio, 13.216-610 Jundiaí-SP (BR)
(86) Internationale Anmeldenummer: PCT/EP2016/066114
(87) Internationale Veröffentlichungsnummer: WO 2017/009167

(56) Entgegenhaltungen:
- FR-A1- 2 934 547
- GB-A- 2 081 403
- JP-A- 2007 076 437

## Beschreibung

Die Erfindung bezieht sich auf einen pneumatisch arbeitenden Bremskraftverstärker für eine hydraulische Kraftfahrzeugbremsanlage, gemäß dem Oberbegriff des Anspruchs 1.
Derartige Bremskraftverstärker sind weit verbreitet und werden in der Regel mittels zwei oder mehr Verbindungsbolzen an einem Karosserieteil - meist der Spritzwand - im Motorraum eines Fahrzeugs befestigt. Für eine effiziente Montage werden die Verbindungselemente an oder in dem Gehäuse des Bremskraftverstärkers fixiert. Bei der Montage des Bremskraftverstärkers werden die vorgenannten Verbindungselemente durch korrespondierende Durchbrüche im Karosserieteil durchgesteckt und von der Gegenseite fixiert.
Im Inneren vom Verstärkergehäuse gattungsgemäßer Bremskraftverstärker ist eine starke axial wirkende Druckfeder - die Rückstellfeder eingespannt. Die Federkraft bewirkt bei einem noch nicht im Fahrzeug montierten Bremskraftverstärker eine leichte elastische Verformung des Verstärkergehäuses, dabei werden die ursprünglich parallel zueinander angeordneten Verbindungselemente auseinandergespreizt. Dies kann zu Montageproblemen führen, weil das korrespondierende Lochbild an der Spritzwand nicht mehr optimal passt.
Um dem Problem mit den gespreizten Verbindungsbolzen bei der Montage entgegenzuwirken ist es bekannt, im Inneren des Verstärkergehäuses im Bereich der Anlagefläche zusätzliche, gesonderte Versteifungsbauteile anzubringen, welche die Spreizneigung vermeiden oder verringern. Als nachteilig bei derartigen Lösungen werden das höhere Systemgewicht, eine aufwendige Herstellung und Montage mit vielen Prozessschritten und somit die höheren Kosten angesehen.

Aus US 2012/0304849 A1 ist ein anderer Lösungsansatz bekannt, bei dem die ebene Anlagefläche an der Rückseite des Verstärkergehäuses sternförmig mit 8 abgerundeten Strahlen gestaltet, die an ihrem radialen Außenrand in die restliche Rückwand des Verstärkergehäuses übergeht, die in Umfangsrichtung entsprechend wellig ausgebildet ist. Eine solche Konstruktion benötigt zwar keine Zusatzteile führt jedoch zu einer massiven unerwünschten Vergrößerung des "Totvolumens" in der Arbeitskammer - dem Raum zwischen der Rückwand und der beweglichen Wand im Gehäuse inneren. Dadurch verschlechtert sich das Ansprechverhalten des Bremskraftverstärkers und es muss nach jedem Bremsvorgang mehr Luft evakuiert werden.

Aus GB 2 081 403 A ist es bekannt, am Verstärkergehäuse einen gegenüber der Anlagefläche planparallel nach innen über einem umlaufenden Absatz abgesetzten Flächenabschnitt beizuordnen.

Die Erfindung beruht somit auf der Aufgabe, einen verbesserten Bremskraftverstärker anzubieten, der sich im Fahrzeug einfach montieren lässt und die vorgenannten Nachteile vermeidet.

Die Aufgabe wird erfindungsgemäß durch einen Bremskraftverstärker mit der Merkmalskombination nach dem Anspruch 1 gelöst, Unteransprüche zusammen mit Figurenbeschreibungen und Darstellungen geben weitere vorteilhafte erfindungsgemäße Ausführungsformen und Weiterbildungen an.

Indem der Anlagefläche ein mittels eines umlaufenden Absatzes axial planparallel nach innen abgesetzter planarer Flächenabschnitt unmittelbar benachbart beigeordnet wird, kann eine signifikante Steifigkeitserhöhung ohne Zusatzelemente erreicht werden. Zugleich wird das Totvolumen nicht erhöht, da der Flächenabschnitt in Richtung bewegliche Wand abgesetzt ist und somit das Totvolumen reduziert. Durch eine räumlich relativ einfache Formgebung werden die Werkzeugkosten nicht erhöht. Erfindungsgemäß wird der Flächenabschnittradial außen in einen konisch ausgebildeten Ringabschnitt des Verstärkergehäuses übergehend gestaltet, wodurch die Steifigkeit durch einen weiteren axialen Knick in der Wand des Verstärkergehäuses erhöht und das Totvolumen weiter reduziert wird, die Rückwand des Verstärkergehäuses dadurch noch näher an die bewegliche Wand gerückt wird.

Weiter erfindungsgemäß wird der Ringabschnitt gegenüber einem den Ringabschnitt radial umgebenden äußeren Wandabschnitt über eine umlaufende Abstufung (14) axial nach innen versetzt ausgebildet. Die Steifigkeit des Verstärkergehäuses wird dadurch weiter erhöht und die Geräuschemissionen reduziert, weil größere aufgespannte Oberflächen in kleinere Abschnitte gebrochen und damit Eigenfrequenzen signifikant erhöht werden. Dröhngeräusche werden effektiv reduziert.

Anhand einer besonders bevorzugten Weiterbildung wird der äußere Wandabschnitt dabei konisch gestaltet, wobei der Neigungswinkel des Ringabschnitts vorzugsweise undgleich dem Neigungswinkel des äußeren Wandabschnitts ausgebildet wird, wodurch bei weiter erhöhten Steifigkeit die Dröhngefahr aufgrund unterschiedlicher Schallabstrahlwinkel weiter reduziert wird.

In einer bevorzugten erfindungsgemäße Ausführungsform umfasst die Anlagefläche einen inneren Mittelbereich sowie wenigstens zwei äußere, radial über den Mittelbereich hinausragende Außenbereiche, wobei die Verbindungsbolzen jeweils an den Außenbereichen mit dem Verstärkergehäuse verbunden werden.

In einer bevorzugten Weiterbildung ist die radiale Ausdehnung der Außenbereiche und der Verlauf des Absatzes in seinen an die Außenbereiche angrenzenden Abschnitten derart ausgestaltet, dass der Absatz dort nicht in den planen Flächenabschnitt, sondern direkt in den einläuft.

Dadurch werden gezielt die kritischen Anbindungsbereiche der Verbindungsbolzen an das Verstärkergehäuse besonders steif ausgeführt und der Kraftfluss aus dem Verbindungsbolzen in das Verstärkergehäuse optimiert.

Im Folgenden soll anhand verschiedener Ausführungsbeispiele die Erfindung näher erläutert werden. Weil der Aufbau und Funktionsweise gattungsgemäßer Bremskraftverstärker wohl bekannt sind, werden nachfolgend lediglich die erfindungsrelevanten Aspekte erläutert.
Nachstehend zeigt die
Fig.1 Schnittansicht eines bekannten gattungsgemäßen Bremskraftverstärkers mit einem daran montierten Hauptbremszylinder.
Fig.2 Eine vereinfachte Detailansicht zur Verdeutlichung der Montageproblematik bei gespreizten Verbindungsbolzen.
Fig.3 Innenansicht der rückwärtigen Wand eines Verstärkergehäuses eines erfindungsgemäß verbesserten Bremskraftverstärkers.
Fig.4 Außenansicht der rückwärtigen Wand eines Verstärkergehäuses gemäß Fig.3.
Fig.5 Teilschnitt einer Ausführungsform eines Verstärkergehäuses gemäß Fig.4.

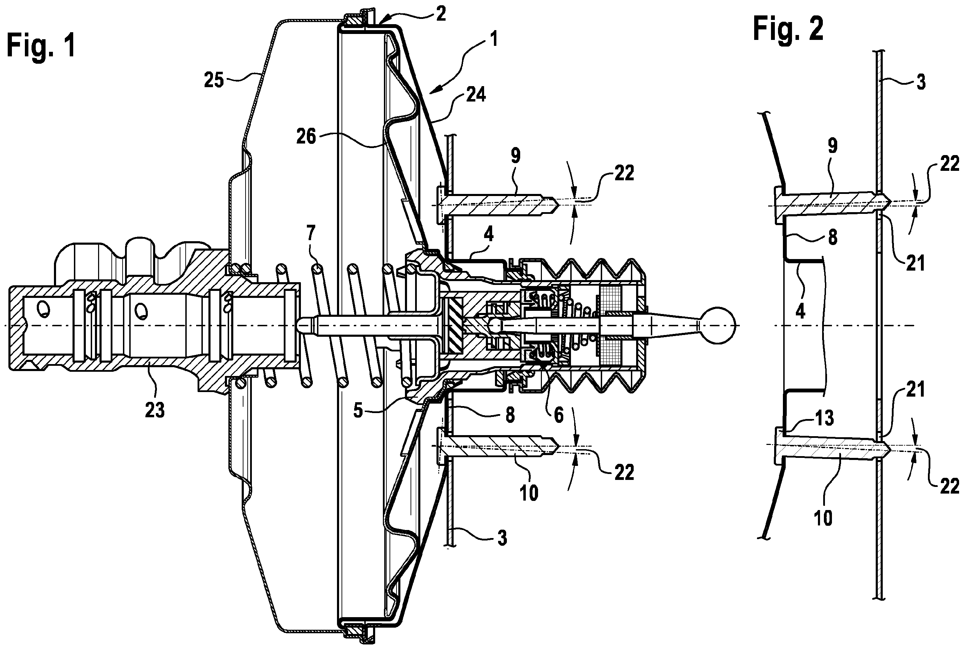

Ein in der Fig.1 abgebildeter bekannter pneumatischer Bremskraftverstärker 1 verfügt über ein Verstärkergehäuse 2, welches an seiner hier rechts dargestellten Seite an einem Karosserieteil 3 befestigbar ist. An der gegenüberliegenden Seite ist das Gehäuse eines Hauptbremszylinders 23 dargestellt. Das Verstärkergehäuse 2 umfasst zwei Gehäuseschalen - eine hintere, karosserieseitige Gehäuseschale 24 und eine ihr vordere, hauptbremszylinderseitige Gehäuseschale 25, die axial entlang der Mittelachse A in Reihe angeordnet und miteinander verbunden sind.
Neben dem dargestellten Single-Bremskraftverstärker kann sich die Erfindung auch auf einen Tandem-Bremskraftverstärker erstrecken.
Die hintere Gehäuseschale 24 des Verstärkergehäuses 2 bildet einen zentralen Tubus 4 aus, der sich axial nach außen in Richtung Karosserieteil 3 erstreckt. In dem Tubus 4 ist ein axial verschiebbares Steuergehäuse 5 mit einer darin aufgenommenen, den Bremskraftverstärker 1 steuernden Ventilanordnung 6 bereichsweise angeordnet. Eine axial bewegliche Wand 26 leitet die Verstärkungskraft des Bremskraftverstärkers 1 in das daran gekoppelte Steuergehäuse 5.
Des Weiteren bildet das Verstärkergehäuse 2 eine sich vom Ansatz des Tubus 4 orthogonal zu Mittelachse A radial nach außen erstreckende planare, ebene Anlagefläche 8, welche im betriebsbereit montierten Zustand am Karosserieteil 3 anliegt. An ihrem radialen Außenrand geht die im Wesentlichen planare Stirnfläche 8 in eine kegelige Rückwand des Verstärkergehäuses 2 über.
Zwei schraubenartige Verbindungsbolzen 9, 1Z sind zum Verbinden des Bremskraftverstärkers 1 mit dem Karosserieteil 3 vorgesehen und mit der Wand des Verstärkergehäuses 2 innerhalb der Anlagefläche 8 verdrehgesichert verbunden.
Zwischen dem Steuergehäuse 5 und der dem Steuergehäuse 5 gegenüberliegenden, hauptbremszylinderseitigen Innenwand des Verstärkergehäuses 2 ist eine Rückstellfeder 7 elastisch vorgespannt angeordnet. Rückstellfeder 7 ist als eine Druckfeder ausgebildet und dient im Wesentlichen dem Zurückversetzen des Steuergehäuses 5 in seine unbetätigte Ausgangsposition nach einem Bremsvorgang. Mit ihrer Vorspannkraft wirkt die Rückstellfeder 7 entlang der Mittelachse A derart auf das dünnwandige Verstärkergehäuse 2, dass es sich in axiale Richtung elastisch verformt. Die Anlagefläche 8 wölbt sich dabei, was dazu führt, dass die Verbindungsbolzen 9, 10 aus ihrer ursprünglich achsparallelen Normallage jeweils um einen Spreizwinkel 22 nach außen gekippt bzw. gespreizt werden. Bei einer längeren Lagerung eines nicht montierten Bremskraftverstärkers 1 unter einer stätigen Federbelastung, kann sich der Spreizmaß dabei zusätzlich vergrößern.
In der Fig.2 wird das vorstehend beschriebene Effekt und die Auswirkungen auf die Montage des Bremskraftverstärkers 1 verdeutlicht. Das Verstärkergehäuse 2 wird an einem Karosserieteil 3 - zumeist einer Spritzwand im Motorraum - montiert. Für die Verbindungsbolzen 9, 10 sind im Karosserieteil 3 entsprechend korrespondierende Durchbrüche 21 in einem definierten Abstand zueinander. Das Lochabstand entspricht dabei dem Abstand zwischen den Verbindungsbolzen 9 und 10 im Bereich deren Anbindung an das Verstärkergehäuse 2.
Durch die Spreizung der Verbindungsbolzen 9 und 10 vergrößert sich jedoch der Abstand zwischen deren Spitzen, so dass das korrespondierende Lochbild am Karosserieteil 3 nicht mehr optimal passt. Eine Vergrößerung der Durchbrüche 21 ist dabei unerwünscht, weil die Positionierungsgenauigkeit leiden würde, außerdem karosserieseitig Muttern mit einem größeren Außendurchmesser erforderlich wären.

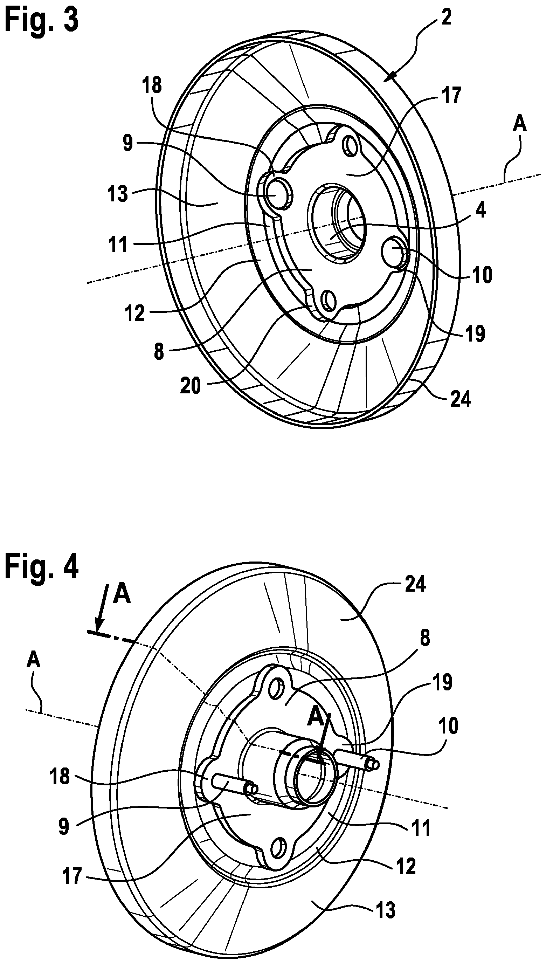

Fig.3 zeigt die Innenansicht und die Fig.4 die Außenansicht der Rückwand bzw. der hinteren Gehäuseschale 24 einer erfindungsgemäßen Ausführungsform eines Bremskraftverstärkers 1 Den Tubus 4 umgibt eine planare Anlagefläche 8, die sich orthogonal zu der Mittelachse A radial erstreckt. Die Anlagefläche 8 umfasst einen inneren Mittelbereich 17 sowie äußere, radial über den Mittelbereich 17 hinausragende Außenbereiche 18, 19 in denen zwei Verbindungsbolzen 9 und 10 mit am Verstärkergehäuse 2 befestigt sind.
In der gezeigten Ausführung sind es zwei gegenüberliegende Außenbereiche 18 und 19 mit Verbindungsbolzen 9 und 10 sowie zwei weitere, in Umfangsrichtung versetzt angeordnete Außenbereiche mit Öffnungen für nicht gezeigte weitere Verbindungselemente. Weitere Anzahl und Anordnung er Außenbereiche sind innerhalb der Erfindung ebenso zulässig.
Unmittelbar neben der der Anlagefläche 8, radial außen zu dieser ist ein planarer Flächenabschnitt 11 am Verstärkergehäuse 2 ausgebildet. Der Flächenabschnitt 11 ist planparallel zu der Anlagefläche 8 angeordnet und axial nach innen durch einen umlaufenden Absatz 20 abgesetzt.
An seinem radialen Außenrand geht der Flächenabschnitt 11 radial in einen konisch ausgebildeten Ringabschnitt 12 der Gehäusewand des Verstärkergehäuses 2 über.
Der Ringabschnitt 12 erstreckt sich in radiale Richtung im Wesentlichen zwischen dem Flächenabschnitt 11 und einer umlaufenden Abstufung 14. Durch diese Abstufung 14 ist der Ringabschnitt 12 gegenüber einem, die Abstufung 14 radial außen unmittelbar umgebenden äußeren Wandabschnitt 13, axial nach innen versetzt.

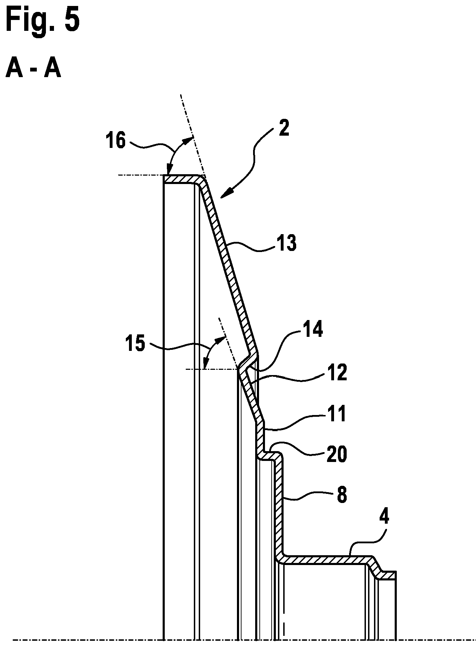

Die Fig.5 verdeutlicht den vorstehend beschriebenen Sachverhalt in einer Schnittansicht gemäß dem Schnitt A-A nach der Fig.4. Hierbei wird insbesondere verdeutlicht, dass sowohl der Ringabschnitt 12 als auch der äußere Wandabschnitt 13 konisch beziehungsweise kegelig geformt sind. Im dargestellten Ausführungsbeispiel ist der Neigungswinkel 15 des Ringabschnitts 12 kleiner als der Neigungswinkel 16 des äußeren Wandabschnitts 13 ausgebildet. Innerhalb der Erfindung können die Neigungswinkel 15, 16 auch in einem anderen Verhältnis zueinander, jedoch bevorzugt ungleich gestaltet sein.

Die vorstehend beschriebene, jeweils den Ringabschnitt 12, die umlaufende Abstufung 14 und den Wandabschnitt 13 umfassende, im gezeigten Ausführungsbeispiel lediglich einfach vorhandene Formation kann innerhalb der Erfindung in äquivalenter Ausbildung in weiteren, hier nicht gezeigten Ausführungen auch mehrfach radial hintereinander angeordnet vorgesehen sein.

### Bezugszeichenliste

- 1: Bremskraftverstärker
- 2: Verstärkergehäuse
- 3: Karosserieteil
- 4: Tubus
- 5: Steuergehäuse
- 6: Ventilanordnung
- 7: Rückstellfeder
- 8: Anlagefläche
- 9: Verbindungsbolzen
- 10: Verbindungsbolzen
- 11: Flächenabschnitt
- 12: Ringabschnitt
- 13: Wandabschnitt
- 14: Abstufung
- 15: Neigungswinkel des Ringabschnitts
- 16: Neigungswinkel des Wandabschnitts
- 17: Mittelbereich
- 18: Außenbereiche
- 19: Außenbereiche
- 20: Absatz
- 21: Durchbruch
- 22: Spreizwinkel
- 23: Hauptbremszylinder
- 24: hintere Gehäuseschale
- 25: vordere Gehäuseschale
- 26: Bewegliche Wand
- A: Mittelachse

## Patentansprüche

1. Pneumatischer Bremskraftverstärker (1) für eine hydraulische Kraftfahrzeugbremsanlage mit einem Verstärkergehäuse (2), welches an einem Karosserieteil (3) befestigbar ist, wobei das Verstärkergehäuse (2) karosserieseitig einen zentralen Tubus (4) aufweist, in dem ein eine Ventilanordnung (6) aufnehmendes axial verschiebbares Steuergehäuse (5) zumindest bereichsweise angeordnet ist, wobei am Verstärkergehäuse (3) eine planare Anlagefläche (8) zur Anlage am Karosserieteil (3) ausgebildet ist, die sich vom Tubus (4) orthogonal zu Mittelachse (A) radial nach außen erstreckt, wobei wenigstens zwei Verbindungsbolzen (9,10) zum Verbinden des Bremskraftverstärkers (1) mit dem Karosserieteil (3) mit dem Verstärkergehäuse (2) verbunden sind sowie axial nach außen ragend innerhalb der Anlagefläche (8) angeordnet sind und wobei zwischen dem Steuergehäuse (5) und einer gegenüberliegenden Innenwand des Verstärkergehäuses (2) eine Rückstellfeder (7) zum Zurückversetzen des Steuergehäuses (5) in seine unbetätigte Ausgangsposition vorgespannt angeordnet ist, wobei der Anlagefläche (8) ein planarer Flächenabschnitt (11) unmittelbar benachbart beigeordnet ist, welcher gegenüber der Anlagefläche (8) planparallel sowie mit einem umlaufenden Absatz (20) axial nach innen abgesetzt am Verstärkergehäuse (2) ausgebildet ist, **dadurch gekennzeichnet, dass** der Flächenabschnitt (11) radial außen in einen konisch ausgebildeten Ringabschnitt (12) des Verstärkergehäuses (2) übergehend gestaltet ist, wobei der Ringabschnitt (12) gegenüber einem den Ringabschnitt (12) radial umgebenden äußeren Wandabschnitt (13) über eine umlaufende Abstufung (14) axial nach innen versetzt ausgebildet ist.

2. Bremskraftverstärker (1) nach Anspruch 1, **dadurch gekennzeichnet, dass** der äußere Wandabschnitt (13) konisch ausgebildet ist, wobei der Neigungswinkel (15) des Ringabschnitts (12) ungleich dem Neigungswinkel (16) des äußeren Wandabschnitts (13) ausgebildet ist.

3. Bremskraftverstärker (1) nach Anspruch 1, **dadurch gekennzeichnet, dass** die Anlagefläche (8) einen inneren Mittelbereich (17) sowie wenigstens zwei äußere, radial über den Mittelbereich (17) hinausragende Außenbereiche (18,19) umfasst, wobei die Verbindungsbolzen (9,10) jeweils an den Außenbereichen (18,19) mit dem Verstärkergehäuse (2) verbunden sind.

4. Bremskraftverstärker (1) nach Anspruch 3 **dadurch gekennzeichnet, dass** der Absatz (20) im Abschnitt des Außenbereichs (18,19) in den Ringabschnitt (12) einlaufend ausgebildet ist.

## Claims

1. Pneumatic brake booster (1) for a hydraulic motor vehicle brake system having a booster housing (2) which can be attached to a vehicle body part (3), wherein the booster housing (2) has, on the vehicle body side, a central tube (4) in which an axially slidable control housing (5), which accommodates a valve arrangement (6), is at least partially arranged, wherein a planar bearing surface (8), for bearing on the vehicle body part (3), is formed on the booster housing (3) and extends radially outward from the tube (4) orthogonally with respect to the central axis (A), wherein at least two connecting bolts (9, 10) for connecting the brake booster (1) to the vehicle body part (3) are connected to the booster housing (2) and are arranged projecting axially outward within the bearing surface (8), and wherein a restoring spring (7) for resetting the control housing (5) to its unactuated initial position is arranged prestressed between the control housing (5) and an inner wall, lying opposite, of the booster housing (2), wherein the bearing surface (8) is assigned a planar surface section (11) in a directly adjacent manner and is embodied so as to be plane-parallel with respect to the bearing surface (8) and axially inwardly recessed on the booster housing (2) with a circumferential offset (20) **characterized in that** the surface section (11) is configured extending radially outward into an annular section (12), of conical construction, of the booster housing (2), wherein the annular section (12) is formed offset axially inward, by means of a circumferential offset (14), with respect to an outer wall section (13) which surrounds the annular section (12) radially.

2. Brake booster (1) according to Claim 1, **characterized in that** the outer wall section (13) is of conical construction, wherein the angle of inclination (15) of the annular section (12) is embodied so as to be unequal to the angle of inclination (16) of the outer wall section (13).

3. Brake booster (1) according to Claim 1, **characterized in that** the bearing surface (8) comprises an inner central region (17) as well as at least two outer external regions (18, 19) which project radially beyond the central region (17), wherein the connecting bolts (9, 10) are each connected at the external regions (18, 19) to the booster housing (2).

4. Brake booster (1) according to Claim 3, **characterized in that** the offset (20) is embodied so as to run into the annular section (12) in the section of the external region (18, 19).

## Revendications

1. Servofrein pneumatique (1) destiné à un système de freinage hydraulique de véhicule automobile, le servofrein comprenant un boîtier de servofrein (2) qui peut être fixé à un élément de carrosserie (3), le boîtier de servofrein (2) comportant du côté carrosserie un tube central (4) dans lequel est disposé au moins par endroits un boîtier de commande (5) pouvant coulisser axialement et logeant un ensemble formant soupape (6), une surface d'appui plane (8) destinée à venir en appui sur l'élément de carrosserie (3) est formée sur le boîtier (3) et s'étend radialement vers l'extérieur depuis le tube (4) orthogonal à l'axe central (A), au moins deux boulons de liaison (9, 10) destinés à relier le servofrein (1) à l'élément de carrosserie (3) étant reliés au boîtier de servofrein (2) et étant disposés de manière à faire saillie axialement vers l'extérieur à l'intérieur de la surface d'appui (8) et un ressort de rappel (7) étant disposé entre le boîtier de commande (5) et une paroi intérieure opposée du boîtier de servofrein (2) pour ramener le boîtier de commande (5) dans sa position de départ non actionnée, la surface d'appui (8) étant directement adjacente à une portion de surface plane (11) qui est parallèle à la surface d'appui (8) et qui est formée avec un épaulement circonférentiel (20) décalé axialement vers l'intérieur sur le boîtier de servofrein (2), **caractérisé en ce que** la portion de surface (11) est conçue pour se transformer radialement à l'extérieur en une portion annulaire conique (12) du boîtier de servofrein (2), la portion annulaire (12) étant décalée axialement vers l'intérieur par rapport à une portion de paroi extérieure (13) entourant radialement la portion annulaire (12) par le biais d'un gradin circonférentiel (14).

2. Servofrein (1) selon la revendication 1, **caractérisé en ce que** la portion de paroi extérieure (13) est conique, l'angle d'inclinaison (15) de la portion annulaire (12) n'étant pas égal à l'angle d'inclinaison (16) de la portion de paroi extérieure (13) .

3. Servofrein (1) selon la revendication 1, **caractérisé en ce que** la surface d'appui (8) comprend une région centrale intérieure (17) et au moins deux régions extérieures (18, 19) faisant saillie radialement au-delà de la région centrale (17), les boulons de liaison (9, 10) étant chacun reliés au boîtier de servofrein (2) au niveau des régions extérieures (18, 19).

4. Servofrein (1) selon la revendication 3, **caractérisé en ce que** l'épaulement (20) est formé dans la portion de la région extérieure (18, 19) de manière à pénétrer dans la portion annulaire (12).
